# EUROPEAN PATENT SPECIFICATION

(11) **EP 3 067 474 B1**
(45) Date of publication and mention of the grant of the patent: **29.07.2020**
(21) Application number: 16000488.3
(22) Date of filing: 01.03.2016
(51) Int. Cl.: E03C 1/04

(54) **SANITARY FITTING**
SANITÄRARMATUR
ROBINETTERIE SANITAIRE

(30) Priority: 09.03.2015 DE 102015002899
(43) Date of publication of application: 14.09.2016
(73) Proprietor: ORAS OY, 26100 Rauma (FI)
(72) Inventor: Maijala, Janne, 26100 Rauma (FI)
(74) Representative: Ostertag & Partner Patentanwälte mbB

(56) References cited:
- WO-A1-2007/113863
- DE-A1- 1 609 044
- DE-A1-102010 018 670
- DE-B3-102005 041 143
- DE-U1-202008 004 921
- US-A- 4 484 600
- US-A- 4 649 958
- US-A1- 2010 125 946

## Description

### BACKGROUND OF THE INVENTION

### 1. Field of the Invention

This invention relates to a sanitary fitting which may be used in a bathroom or kitchen for a controlled release of water.

### 2. Description of the Prior Art

It is known in the prior art to use a flexible hose to guide water from a water inlet to a water outlet of a sanitary fitting. For example, US 2010/0125946 A1 describes a sanitary fitting comprising a body portion and a spray handle. A flexible hose delivers water from the water inlet in the body portion to the water outlet in the spray handle.

EP 2 735 658 A1 discloses a sanitary fitting having a flexible pipe piece made of an elastic plastic material that forms a portion of its waterway. The ends of the flexible pipe piece are connected to rigid pipes that are arranged in an angled configuration.

Such sanitary fittings typically require spacious housings to receive the flexible hose or pipe that forms the waterway.

US 4 484 600 A discloses a sanitary fitting having a swivel spout that consists of an elongated U-shaped shell and an elongated plate that are both molded from ABS plastic material and secured together by means of hot plate welding.

Another sanitary fitting is known from US 4 649 958 A. It comprises stamped upper and lower housing plates having peripheral flanges that mate with a peripheral seal. The seal is elastic and in the shape of an elongated ring.

The shower head of DE 10 2010 018 670 A1 contains an elongated cavity defined by the interaction of a solid and an elastic component. The body shower head has a water distribution space defined by a section of a preferably plastic water-supply body in conjunction with a sealing mat made of an elastic plastic material. The water distribution space extends over the entire length of the body shower head.

DE 10 2005 041 143 B3 discloses a shower head having an interior that is formed by the interaction of an insert made from rubber-elastic material and an upper part. The interior has the shape of a radially elongated bowl. The insert comprises an elongated portion and a ring portion integrally formed with the elongated portion.

With regards to the interior of the shower head that is known from WO 2007/113863 A1, a cavity is formed between a fixed upper plate and a membrane made of rubber, and the water is distributed to the nozzles through this cavity. A sealing ring keeps the upper plate at a distance.

It is therefore an object of the present invention to provide a sanitary fitting that allows more efficient use of the housing space, makes it possible to reduce the dimensions of the sanitary fitting and is easy to assemble.

### SUMMARY OF THE INVENTION

This object is achieved by a sanitary fitting in accordance with claim 1.

The present invention is based on the conception that conventional flexible hoses in sanitary fittings usually have a relatively thick hose wall and need additional structures in the housing that support the hose at a desired position. By forming the waterway, in accordance with the invention, by an elongated interspace between two adjacent components, significantly less space is needed. It is thus possible, for example, to provide a sanitary fitting that has a very flat cross section.

Since one of the adjacent components is flexible, an additional sealing element may be dispensed with. This additionally helps to reduce the dimensions of the sanitary fitting and also simplifies its assembly. However, it may also be contemplated to use an additional sealing between the two components. Using a flexible component has also the advantage that noise caused by water running through the waterway is muffled. The use of a flexible component forming the waterway also relieves the production tolerances and thus helps to reduce manufacturing costs.

In one embodiment the flexible component and the rigid component are connected by an interlocking connection. As the flexible component can be easily deformed, the interlocking connection is usually fluid-tight, and it can be achieved very easily by pressing together the two components in their correct mutual orientation.

The interlocking connection may be obtained by using a flexible component that comprises a bottom wall and adjacent side walls; at least this portion of the flexible component thus has basically the shape of an open channel. The side walls engage into grooves that are formed in the rigid component. By inserting the side walls of the flexible component into grooves of the rigid component, a large contact area between the flexible component and the rigid component is provided, thus ensuring effective sealing.

In accordance with the present invention, the flexible component comprises an elongated portion extending along the waterway and a ring shaped portion that is integrally formed with the elongated portion. The ring shaped portion provides a seal between the rigid component and a water outlet component that is configured to receive an aerator or a similar insert.

In that case the interspace between the rigid component and the flexible component preferably extends from the water inlet to the water outlet component. No additional connectors or fittings may be necessary in that case, because the interspace extends basically along the entire axial length of the waterway. Alternatively, the interspace between the rigid component and the flexible component may extend only along a significant portion of the axial length of the waterway, for example along at least 90%. In that case the flexible component may supply water to a further component arranged upstream of the water output component, for example.

Water is usually supplied to a mixing valve of the sanitary fitting by a connection to a pipe or to a hose that is external to the housing of the sanitary fitting. The valve arranged inside the sanitary fitting is not considered as being part of the waterway as such. The water inlet is fluidly connected to the valve and defines the start of the waterway through the sanitary fitting. The water outlet is defined by the cross section of the sanitary fitting, at which the water flow leaves the sanitary fitting.

The ring shaped portion of the flexible component may be formed by a cylindrical side wall that is integrally formed with the side walls of the channel shaped elongated portion. By dispensing with the bottom wall at this end of the flexible component, the ring shaped portion is obtained that defines an opening through which the water can flow, via the outlet component, to the water outlet.

The side wall forming the ring portion may engage along its circumference with one part of its height into the rigid component. With the remaining part the side wall may engage into the water outlet component, so that the rigid component and the water outlet component are sealingly connected by the flexible component. By connecting the water outlet component to the rigid component via the flexible component, production tolerances may be set wider and production cost can thus be lowered.

The flexible component is made of silicone or rubber. These materials have sufficient elasticity to serve as a sealing when they are in contact with the rigid component. Furthermore, silicone and rubber have good noise damping properties.

The flexible component is arranged between the rigid component and a housing component of the sanitary fitting. A housing component is a component that can be seen by a user of the sanitary fitting after it has been mounted on a sink, for example.

For optimal use of space within the sanitary fitting, the flexible component may be in direct contact with the housing component and can slightly adapt its form to better fit into a hollow space between the housing component and the rigid component in the assembled sanitary fitting. Since sanitary fittings often have an angled shape, it might be advantageous to produce the flexible component such that it at least basically follows the contour of the housing component and the rigid component. This may be achieved using an injection molding process, for example. This prevents a significant bending of the flexible component which could potentially cause a local narrowing of the waterway.

The rigid component and the flexible component may be commonly received in a recess formed in said housing component. Then a further covering component may be provided that covers the rigid component and thus provides, together with the housing component, a closed housing for the sanitary fitting. This stacked configuration of the components results in a sanitary fitting with a very efficient space usage and which is easy to assemble. If the housing component, the rigid component and the covering component are made of a plastic material produced in an injection molding process, very low production cost may be achieved.

### BRIEF DESCRIPTION OF THE DRAWINGS

Various features and advantages of the present invention may be more readily understood with reference to the following detailed description taken in conjunction with the accompanying drawings in which:
- Fig. 1: is an exploded view showing important components of a sanitary fitting according to the invention;
- Fig. 2: is a front view of the sanitary fitting;
- Fig. 3: is a cross section view of the assembled sanitary fitting along line III-III;
- Fig. 4: is a side view of the sanitary fitting;
- Fig. 5: is a cross section view of the assembled sanitary fitting along line V-V.

### DETAILED DESCRIPTION OF PREFERRED EMBODIMENTS

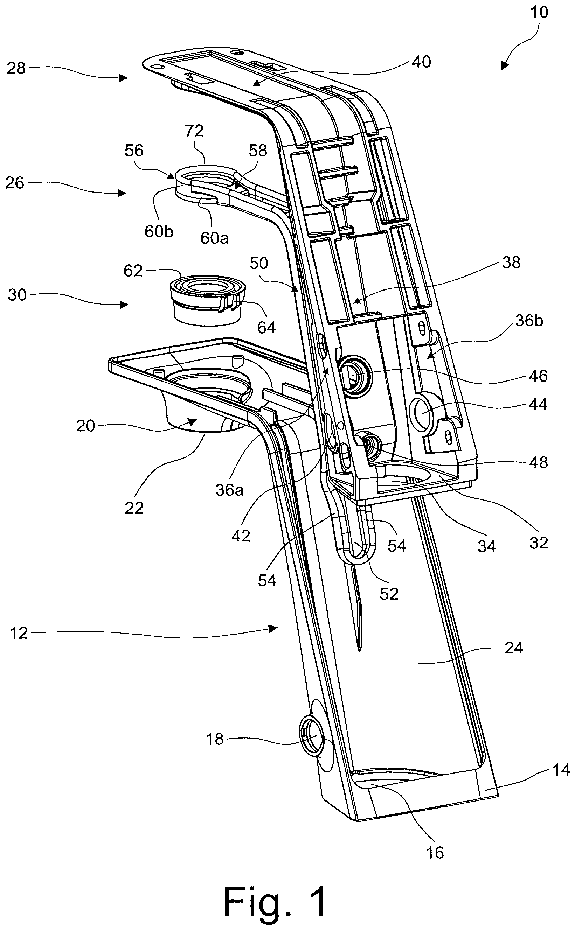

FIG. 1 shows in an exploded view showing important components of a sanitary fitting 10 according to the invention. Only those components are shown that are relevant for the invention.

A housing component 12 that can be seen by a user of the sanitary fitting in its assembled state has a base portion 14 which is usually placed on a sink (not shown). The base portion 14 has a base opening 16 which can receive water pipes (also not shown) for supplying water to or releasing water from the sanitary fitting 10. The housing component 12 further comprises a mixing unit opening 18 arranged in proximity to the base portion 14. The mixing unit opening 18 can receive, for example, a shaft (not shown) that connects an operating lever (not shown) arranged outside the housing to a mixing unit such as a valve to allow manual operation of the mixing unit. At its remote end the housing component 12 has an outlet portion 20 with an outlet portion opening 22 which receives a water outlet component 30. The housing component 12 has basically the shape of an elongated angled half-shell and comprises a recess 24 configured to receive a flexible component 26 and a rigid component 28.

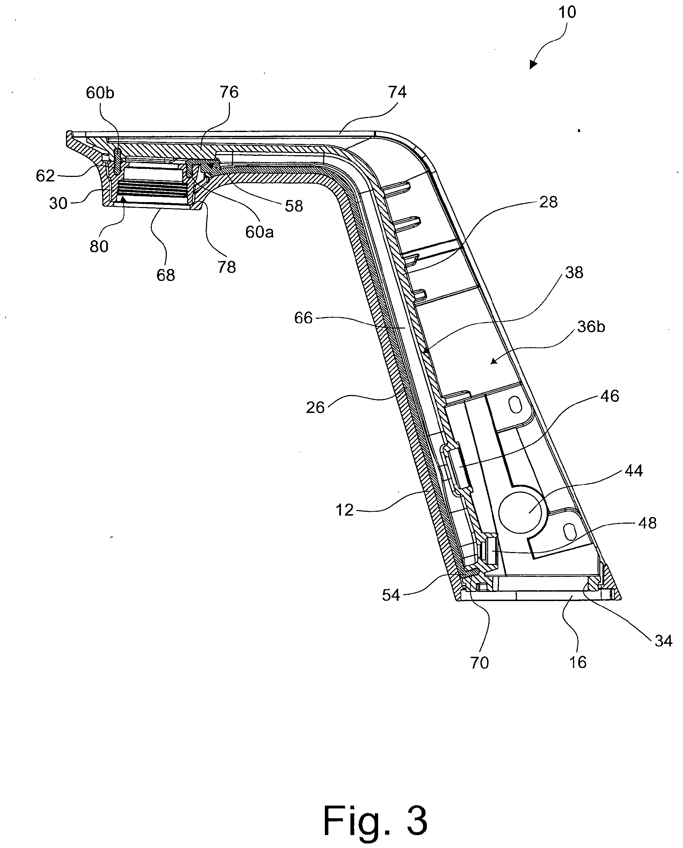

The rigid component 28 comprises a base 32 which fits into the base portion 14 of the housing component 12. The base 32 has an opening 34 corresponding to the base opening 16 of the housing component 12. The rigid component 28 has two opposing side portions 36a, 36b and a front portion 38 arranged between and integrally formed with the side portions 36a and 36b. The remote end of the front portion 38 is integrally formed with a horizontal portion 40 of the rigid component 28. In the side portion 36a there is an opening 42 and in the side portion 36b there is a recess 44 coaxial to the opening 42 such that the opening 42 and the recess 44 can receive and support a mixing unit (not shown). The front portion 38 of the rigid component 28 comprises a water inlet 46 that is fluidly connected to the mixing unit and defines the start of the waterway through the sanitary fitting 10. The rigid component 28 further comprises a bypass water outlet opening 48 arranged in the front portion 38 in proximity to the base 32, the function of which will be described in more detail further below with reference to FIG. 3.

The flexible component 26, which is made of silicon or rubber, has a channel shaped elongated portion 50 comprising a bottom wall 52 and adjacent side walls ' 54, which are merged at the symmetry plane of the flexible component 26 to form one circumferential wall. The flexible component 26 further comprises a ring shaped portion 56 that is integrally formed with a bridge portion 58 disposed between the ring shaped portion 56 and the channel shaped elongated portion 50. The ring shaped portion 56 is obtained by dispensing with the bottom wall 52 and defines an opening for the water such that the latter can flow pass to the water outlet component 30 which defines the next portion of the waterway along the flow direction. The ring shaped portion 56 is formed by a cylindrical side wall with a circumferential lower part 60a and an open upper part 60b integrally formed with the side walls of the adjacent bridge portion 58 of the flexible component 26. While the open upper part 60b engages into the rigid component 28, the remaining circumferential lower part 60a the side wall engages into a groove 62 that is provided in the water outlet component 30. In this manner the rigid component 28 and the water outlet component 30 are sealingly connected by the flexible component 26. The bridge portion 58 covers positioning ribs 64 of the water outlet component 30. The positioning ribs 64 ensure a peripheral positioning of the water outlet component 30 in the outlet portion 20 of the housing component 12.

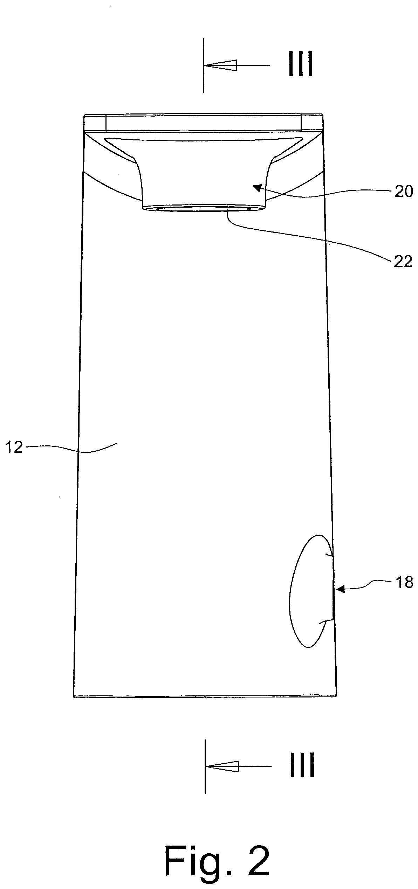

FIG. 2 is a front view of the sanitary fitting 10 in which the housing component 12 with the mixing unit opening 18 and the outlet portion 20 can be seen.

FIG. 3 is a cross section view along line III-III of FIG. 2 showing the sanitary fitting 10 in an assembled state. The rigid component 28 and the flexible component 26 are received in the recess 24 formed in the housing component 12 such that the flexible component 26 is arranged between the housing component 12 and the rigid component 28. In order to optimally use the space within the sanitary fitting 10, the flexible component 26 is in direct contact with the housing component 12 and can slightly adapt its form to better fit into a hollow space between the housing component 12 and the rigid component 28 in the assembled sanitary fitting 10. The flexible component 26 may be produced in an injection molding process such that it at least basically follows the angled contour of the housing component 12 and the rigid component 28. This prevents a significant bending of the flexible component 26 which could potentially cause a local narrowing of the waterway.

In the assembled state, as it is shown in FIG. 3, the rigid component 28 is covered by a covering element 74 to provide a closed housing for the sanitary fitting 10. This stacked configuration of the various components results in a sanitary fitting 10 which has a particularly flat cross section and is easy to assemble. If the housing component 12, the rigid component 28 and the covering component 74 are made of a plastic material and produced in an injection molding process as well, the overall production cost for the sanitary fitting 10 can be kept very small.

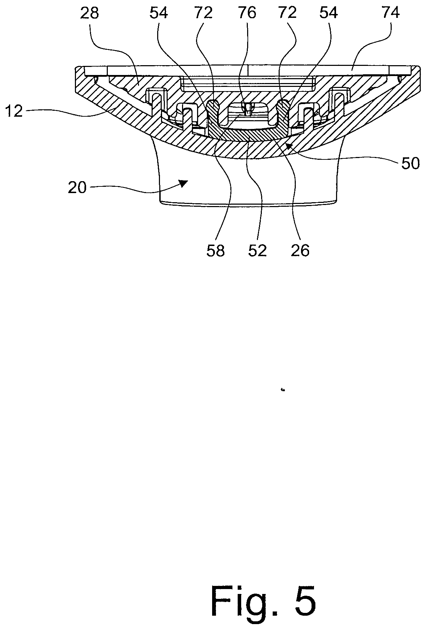

In the assembled state of the sanitary fitting 10, water provided by the mixing unit enters through the water inlet 46 of the rigid component 28 the waterway that is created by an elongated interspace 66 formed between the rigid component 28 and the flexible component 26. The water is guided along this waterway from the water inlet 46 to the water outlet 68 of the sanitary fitting 10. The fluid-tight sealing of the waterway is achieved by pressing the two components 26, 28 together in their correct mutual orientation. When the side walls 54 of the flexible component 26 are inserted into grooves 70 formed in the rigid component 28, a beaded rim 72 at the side walls 54, as can be seen in FIG. 1, is fitted into the grooves 70 such that an interlocking connection of the flexible component 26 and the rigid component 28 is achieved. The flexible component 26 adapts to the geometry of the grooves 70, thereby providing a big contact surface between the flexible component 26 and the rigid component 28 and thus effectively sealing the waterway. For this, the grooves 70 can comprise an undercut, in which the beaded rim 72 is fitted into, as this is shown in the cross section of FIG. 5, or alternatively have straight walls.

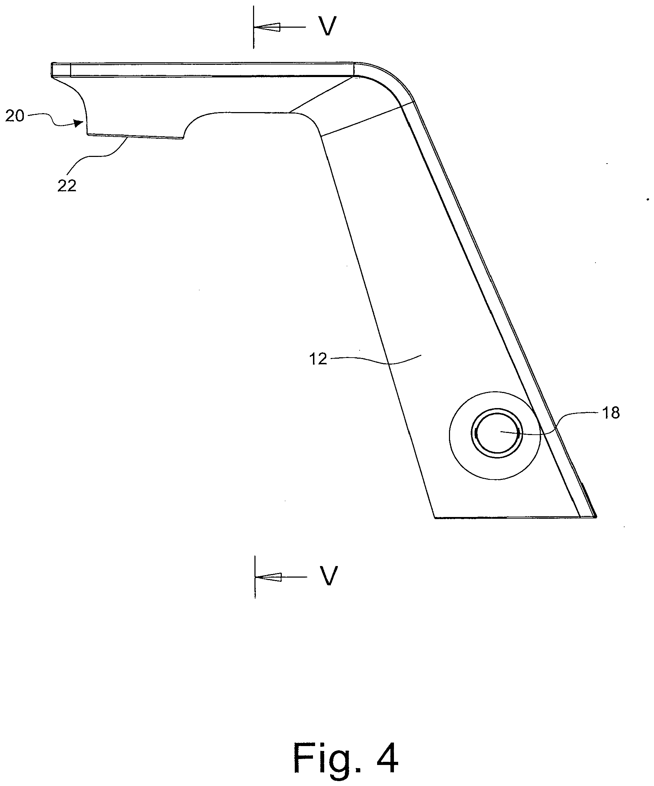

FIG. 4 shows a side view of the sanitary fitting 10 with the mixing unit opening 18 and the outlet portion 20 of the housing component 12.

In the following the positioning of the water outlet component 30 in the housing component 12 is described with reference to FIG. 3 and the cross section along line V-V shown in FIG. 5. The rigid component 28 is fastened to the housing component 12. A middle rib 76 formed in the horizontal portion 40 of the rigid component 28 presses onto the bridge portion 58 of the flexible component 26 which is in direct contact with the water outlet component 30. In this way the water outlet component 30 is pressed against a shoulder 78 formed in the outlet portion 20 of the housing component 12 so that a secured axial positioning of the water outlet component 30 is ensured. In FIG. 5 a projection of the middle rib 76 can be seen which presses onto the bridge portion 58 of the flexible component 26. By connecting the water outlet component 30 to the rigid component via the flexible component 26, production tolerances may be set wider and production cost can thus be lowered.

Water flowing along the waterway from the water inlet 46 through the interspace 66 towards the ring shaped portion 56 of the flexible component 26 passes through the opening of the ring shaped portion 56 into the water outlet component 30. The water outlet component 30 comprises a threaded portion 80 which can receive an aerator (not shown), for example.

An additional secondary waterway is defined by the bypass water outlet opening 48 which may be connected to an outlet pipe (not shown) received in the base opening 34 and the housing component base opening 16. The bypass water outlet opening 48 may be activated by a separate control element so that mixed water supplied by the water inlet 46 may be delivered upon demand from the interspace 66 between the flexible component 26 and the rigid component 28 to a further sanitary fitting (not shown) that is connected to said outlet pipe.

In FIG. 5 also the channel shaped elongated portion 50 of the flexible component 26 with the bottom wall 52 and the side walls 54 can be seen. The side walls 54 are inserted into the circumferential grooves 70 of the rigid component 28 such that the beaded rim 72 of each side wall 54 is fitted through the neck portion 74 of each groove 70.

## Claims

1. A sanitary fitting comprising
a) a water inlet (46),
b) a water outlet (68),
c) a waterway connecting the water inlet (46) to the water outlet (68), and
d) a rigid component (28) extending along the waterway, and
e) a flexible component (26) extending along the waterway and made of silicone or rubber, wherein the flexible component (26) is arranged between the rigid component (28) and a housing component (12) of the sanitary fitting,
wherein the flexible component (26) sealingly contacts the rigid component (28) such that an elongated interspace (66) is formed between the rigid component (28) and the flexible component (26), wherein the interspace (66) forms at least a portion of the waterway, wherein the flexible component (26) comprises an elongated portion (50) extending along the waterway and a ring shaped portion (56) that is integrally formed with the elongated portion (50), and wherein the ring shaped portion (56) provides a seal between the rigid component (28) and a water outlet component (30) that is configured to receive an aerator.

2. The sanitary fitting according to claim 1, **characterized in that** the flexible component and the rigid component are connected by an interlocking connection.

3. The sanitary fitting according to claim 2, **characterized in that** the flexible component (26) comprises a bottom wall (52) and adjacent side walls (54), and that the side walls (54) engage into grooves (70) that are formed in the rigid component (28).

4. The sanitary fitting according to claim 1, **characterized in that** the interspace (66) between the rigid component (28) and the flexible component (26) extends between the water inlet (46) and the water outlet component (30).

5. The sanitary fitting according to claim 1, **characterized in that** the rigid component (28) and the flexible component (26) are commonly received in a recess (24) formed in the housing component (12) of the sanitary fitting (10).

## Patentansprüche

1. Eine Sanitärarmatur mit
a) einem Wassereinlass (76),
b) einem Wasserauslass (68),
c) einem Wasserweg, der den Wassereinlass (46) mit dem Wasserauslass (68) verbindet, und
d) einer festen Komponente (28), die sich entlang des Wasserwegs erstreckt, und
e) einer flexiblen Komponente (26), die sich entlang des Wasserwegs erstreckt und aus Silikon oder Gummi hergestellt ist, wobei die flexible Komponente (26) zwischen der festen Komponente (28) und einer Gehäusekomponente (12) der Sanitärarmatur angeordnet ist,
wobei die flexible Komponente (26) die feste Komponente (28) so abdichtend berührt, dass ein langgestreckter Zwischenraum (66) zwischen der festen Komponente (28) und der flexiblen Komponente (26) ausgebildet wird, wobei der Zwischenraum (66) wenigstens einen Abschnitt des Wasserwegs bildet,
wobei
die flexible Komponente (26) einen langgestreckten Abschnitt (50), der sich entlang des Wasserwegs erstreckt, und einen ringförmigen Abschnitt (56) aufweist, der einstückig mit dem langgestreckten Abschnitt (50) ausgebildet ist, und wobei
der ringförmige Abschnitt (55) eine Dichtung zwischen der festen Komponente (28) und einer Wasserauslasskomponente (30) bereitstellt, die dazu eingerichtet ist, einen Luftsprudler aufzunehmen.

2. Die Sanitärarmatur gemäß Anspruch 1, **dadurch gekennzeichnet, dass** die flexible Komponente und die feste Komponente durch eine Eingriffsverbindung miteinander verbunden sind.

3. Die Sanitärarmatur gemäß Anspruch 2, **dadurch gekennzeichnet, dass** die flexible Komponente (26) eine Bodenwand (52) und benachbarte Seitenwände (54) aufweist, und dass die Seitenwände (54) in Nuten (70) eingreifen, die in der festen Komponente (28) ausgebildet sind.

4. Die Sanitärarmatur nach Anspruch 1, **dadurch gekennzeichnet, dass** sich der Zwischenraum (66) zwischen der festen Komponente (28) und der flexiblen Komponente (26) zwischen dem Wassereinlass (46) und der Wasserauslasskomponente (30) erstreckt.

5. Die Sanitärarmatur gemäß Anspruch 1, **dadurch gekennzeichnet, dass** die feste Komponente (28) und die flexible Komponente (26) gemeinsam in einer Ausnehmung (28) aufgenommen sind, die in der Gehäusekomponente (2) der Sanitärarmatur (10) ausgebildet ist.

## Revendications

1. Robinetterie sanitaire comprenant
a) une entrée d'eau (46),
b) une sortie d'eau (68),
c) un passage d'écoulement d'eau reliant l'entrée d'eau (46) à la sortie d'eau (68), et
d) un composant rigide (28) s'étendant le long du passage d'écoulement d'eau, et
e) un composant flexible (26) s'étendant le long du passage d'écoulement d'eau et constitué de silicone ou de caoutchouc, où le composant flexible (26) est agencé entre le composant rigide (28) et un composant de logement (12) de la robinetterie sanitaire,
où le composant flexible (26) est en contact de manière étanche avec le composant rigide (28) de telle sorte qu'un espacement allongé (66) est formé entre le composant rigide (28) et le composant flexible (26), où l'espacement (66) forme au moins une partie du passage d'écoulement d'eau,
où le composant flexible (26) comprend une partie allongée (50) s'étendant le long du passage d'écoulement d'eau et une partie en forme de bague (56) qui est formée de manière solidaire avec la partie allongée (50), et où la partie en forme de bague (56) assure une étanchéité entre le composant rigide (28) et un composant de sortie d'eau (30) qui est configuré pour recevoir un aérateur.

2. Robinetterie sanitaire selon la revendication 1, **caractérisée en ce que** le composant flexible et le composant rigide sont reliés par une liaison d'interverrouillage.

3. Robinetterie sanitaire selon la revendication 2, **caractérisée en ce que** le composant flexible (26) comprend une paroi inférieure (52) et des parois latérales adjacentes (54), et **en ce que** les parois latérales (54) s'engagent dans des rainures (70) qui sont formées dans le composant rigide (28).

4. Robinetterie sanitaire selon la revendication 1, **caractérisée en ce que** l'espacement (66) entre le composant rigide (28) et le composant flexible (26) s'étend entre l'entrée d'eau (46) et le composant de sortie d'eau (30).

5. Robinetterie sanitaire selon la revendication 1, **caractérisée en ce que** le composant rigide (28) et le composant flexible (26) sont communément reçus dans un évidement (24) formé dans le composant de logement (12) de la robinetterie sanitaire (10).
